# EUROPEAN PATENT SPECIFICATION

(11) **EP 0 967 053 B1**
(45) Date of publication and mention of the grant of the patent: **16.07.2003**
(21) Application number: 99850081.3
(22) Date of filing: 12.05.1999
(51) Int. Cl.: B25B 23/14, B23P 19/06

(54) **Method for determining the axial load in a threaded fastener when tightened above its yield point**
Verfahren zum Feststellen der Axiallast eines mit Gewinde versehenen Befestigungsmittels, wenn dieses über den Streckgrenz-Punkt hinaus angezogen wird
Méthode pour déterminer la charge axiale d'un élément taraudé quant celui-ci est tensioné au-delà de la limite de déformation

(30) Priority: 14.05.1998 SE 9801691
(43) Date of publication of application: 29.12.1999
(73) Proprietor: ATLAS COPCO TOOLS AB, 105 23 Stockholm (SE)
(72) Inventor: Andersson, Tobias Axel, 131 34 Nacka (SE)
(74) Representative: Pantzar, Tord

(56) References cited:
- DE-C- 19 643 933
- GB-A- 2 037 430
- US-A- 3 939 920
- US-A- 4 530 143
- US-A- 4 620 450

## Description

The invention is related to a method for determining the axial load in a threaded fastener when tightened to and above its yield point (according to claim 1), i.e. into the plastic deformation range of the fastener, by detecting the variation in travel time for ultrasonic waves induced into the fastener, and a method for tightening a threaded fastener to a predetermined axial load (according to claim 3).

In for instance the motor vehicle industry, it is desirable to keep down the weight of at least some types of threaded fasteners comprised in various vehicle structures. This is accomplished by utilising the maximum clamping force obtainable by a certain size of fasteners, which means that the fastener is tightened to its yield point, i.e. just beyond its elastic deformation range. This well known method is described in for instance US Patent No. 2,600,549.

When tightening a fastener to a level above its yield point, however, there is a problem to accurately determine the obtained axial load, because in that range the axial load does not increase linearly in relation to the angle of rotation.

In prior art, there has been no simple and reliable method available for obtaining an accurate information about the accomplished axial load when tightening a fastener into the plastic deformation range.

According to one well known method for tightening a fastener into the plastic deformation range, the yield point is determined by detecting the significant change in torque growth obtained in that point, and by tightening the fastener over another predetermined angle from that point on. By this method, a high clamping ability of the fastener is utilised since it is tensioned above the yield point, but there is no possibility to determine the actually obtained axial load on the fastener. Occurring variations in the frictional resistance in the fastener cause a considerable scattering of the obtained axial load not only in the yield point but also in the final shut-off point.

A well known method for determining the axial load on a fastener and described in for instance US Patent No 3,969,810 or GB 2 037 430, comprises measuring the change in travel time of ultrasonic waves induced axially into the fastener. This method is applicable on tightening a fastener within the elastic deformation range only, because the direct correspondence between the ultrasonic wave travel time and the axial load exists only when there is a linear relationship between the elongation of the fastener and the axial load. However, this is not the case in the plastic deformation range, where the fastener is elongated at a low axial load increase only. This means that this method, as previously described, is not useful to determine the axial load on a fastener at yield tightening.

There is also previously suggested a method for determining the obtained axial load in a fastener by measuring the change in travel time for ultrasonic waves induced into the fastener, also when tightening the fastener into the plastic deformation range. This method is based on a pre-tightening establishment of the relationship between the change in ultrasonic wave travel time and the axial load on the actual type of fastener. Based on this information, the obtained axial load is determined by measuring the change in the ultrasonic travel time and relating it to the previously established relationship between the travel time and the axial load.

This known method, however, does not take into account the variations in the frictional resistance and, thereby, the variations in axial load level obtained at the yield point of the fastener as well as in the plastic deformation range.

As mentioned above, the axial load in and above the yield point does not correspond directly to the elongation of the fastener but depends on the actual friction conditions in the fastener as well. This is due to the fact that a high frictional resistance in the fastener causes increased shearing stresses on the fastener, and a plastic deformation of the fastener takes place at a lower axial load. Accordingly, the axial load in the yield point for a certain type of fastener varies a lot since it is highly dependent on the actual friction conditions in the fastener.

The invention intends to provide a method for accurately determining the axial load in a threaded fastener as the latter is tightened to a pretension level above the yield point by using the change in travel time of ultrasonic waves induced in the fastener for determining the axial load in the yield point as well as in the final pretension level of the fastener.

Further characteristics and advantages of the invention will appear from the following description and claims.

The new method according to the invention comprises a pre-tightening investigation process in which the actual type of fastener is subjected to tightening operations including pre-tensioning into the plastic deformation range. This pre-tightening investigation process includes tightening of a number of fasteners to a level above the yield point while measuring by means of a suitable equipment the applied torque, the rotation angle, the axial load, and the travel time for ultrasonic waves induced into the fastener.

Thereby, it is possible to determine the relationship between the axial load, the rotation angle and the ultrasonic wave travel time. It is also possible to investigate the magnitude and the scattering of the torque level at which the fastener starts deforming plastically. It is important to determine the relationship between the axial load and the travel time for the ultrasonic waves in the plastic deformation range of the fastener, because in that range this relationship is no longer linear.

It is of particular importance to investigate how the axial load above the yield point varies with the axial load level in the yield point. The higher the frictional resistance the lower axial load in the yield point. As mentioned above, the explanation to this is that both the axial load and the torsional load contribute to the strain in the fastener and cause together the fastener material to yield at a certain level. This means that a high frictional resistance causes the fastener material to yield at a lower axial load, and, accordingly, it is important to include in the investigation process fasteners having the lowest and highest frictional resistance that can be expected in a normal fastener production, because that would give an indication not only on the scattering range of the frictional resistance but also of the lowest axial load to be expected at the yield point of the fastener. This information is of decisive importance when determining the proper size of fastener to be used.

Since the ultrasonic wave travel time reflects the axial load in the elastic deformation range, it is not possible to use this travel time to indicate the yield point. Instead, the yield point is suitably detected as a significant change in the torque/angle relationship. It may, however, be detected in any other suitable way. In the yield point, the travel time for the ultrasonic waves is determined, though, so as to make it possible to relate the axial load in the following plastic deformation range to a corresponding axial load/travel time relationship determined during the pre-tightening investigating process.

In practice, a fastener of the actual type is intended to be tightened to a predetermined axial load chosen within the range available for this type of fastener as determined during the previous test runs of the fastener. A torque is applied on the fastener and the instantaneous values of the torque, angle of rotation and the ultrasonic wave travel time are indicated. The ultrasonic wave travel time is indicated from the very start of the process to obtain a value for the travel time through the fastener in unloaded condition.

As the yield point is detected by the change in the torque/angle relationship, the tightening is continued to a wave travel time value which according to the pre-tightening investigation corresponds to the desired axial load.

By indicating the travel time value for the ultrasonic waves through the fastener in the yield point and relating the following travel time values indicated above the yield point, it is possible to compensate for variations in the frictional resistance from one fastener to another and to obtain a substantially improved result as to the axial load obtained in the fastener.

The new method is illustrated in the diagrams shown in the accompanying drawings, whereof
Fig 1 shows a diagram illustrating tightening of two fasteners of the same type into the plastic deformation range.
Fig 2 shows the same processes and illustrates the maximum expected target load for two or more fasteners of the same type in relation to the maximum permissible safety angle of rotation of the fastener.

Accordingly, the diagrams on the accompanying drawings show curves illustrating the relationship between the axial load N and the angle of rotation Φ of two fasteners I and II when tightened into the plastic deformation range. Depending on the difference in frictional resistance between the two fasteners, the yield point is reached at two different levels of axial load, namely at the lower level N_{Y1} of the one having the higher frictional resistance and at the higher level N_{Y2} for the one having the lower frictional resistance.

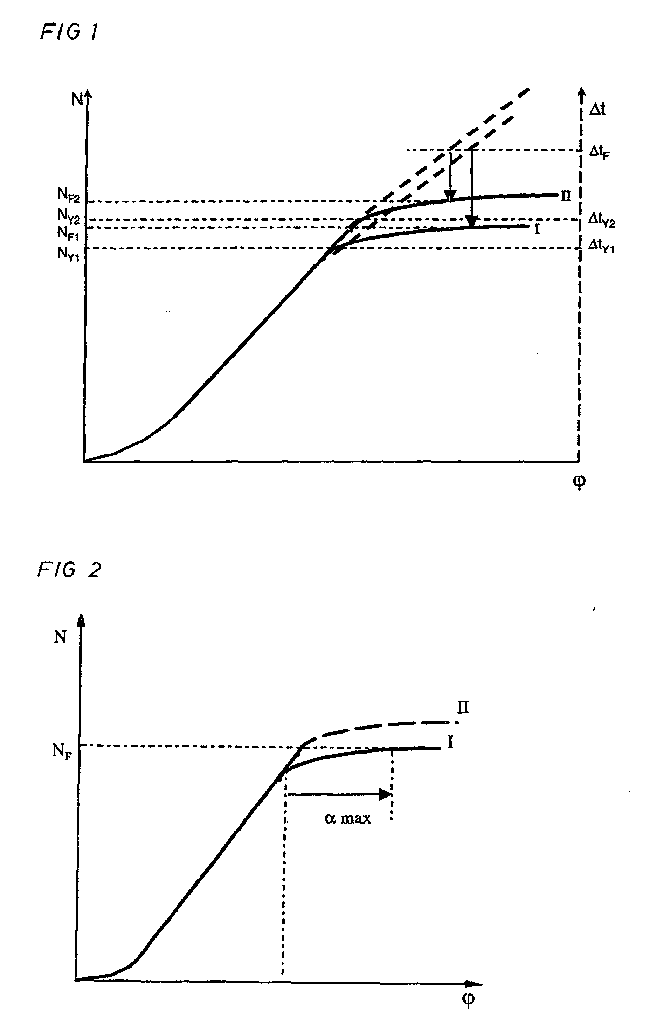

In the diagram in Fig 1, there is also illustrated, in dash lines, how the ultrasonic wave travel time Δt changes in the plastic deformation range in relation to the rotation angle Φ. During the elastic deformation of the fastener, the travel time changes linearly together with the axial load, but due to the plastic deformation of the fastener material above the yield point the travel time changes somewhat slower in relation to the elongation of the fastener.

Accordingly, the travel time Δt for the induced ultrasonic waves continues to increase mainly as a linear function also above the yield point, whereas the axial load N gets a much smaller non-linear increase rate. The vertical arrows in the diagram illustrate the projections of a predetermined final travel time Δt_{F} on the two different axial load/ angle curves. Thereby, it is clearly illustrated that there is obtained a significant difference in the final axial load N_{F} in the two fasteners for a certain level of Δt. This is due to the significant difference in the axial load N_{Y1} and N_{Y2}, respectively, actually obtained in the respective yield points.

If it is decided to interrupt the tightening process at the travel time level Δt_{F}, the high friction fastener I would perform a final axial load N_{F1} which is much lower than the final axial load N_{F2} performed by the low friction fastener II. This is related to the fact that the high friction fastener I performs a relatively low axial load N_{Y1} in its yield point which is reached at a fastener elongation reflected by the wave travel time Δt_{Y1}. The low friction fastener II, on the other hand, performs a relatively high axial load N_{Y2} in its yield point, where the fastener elongation is reflected by the wave travel time Δt_{Y2}. See the diagram.

By relating the predetermined final wave travel time value Δt_{F} to the actual yield point travel time Δt_{Y} and comparing it with the pre-tightening investigation results, it is possible to determine the finally obtained axial load N_{F}.

A suitable application for this new method is to use it for tightening process controlling in the following manner:
I) Establish, in a pre-study, for a particular type of fastener a safety margin, i.e. the angle above the yield point that must not be exceeded. This is illustrated by αₘₐₓ in Fig. 2.
II) Then, establish the target load N_{TL} level from what is obtained by that fastener having the highest frictional resistance when tightened the angle αₘₐₓ above its yield point. See curve I in Fig. 2.
III) Then, tighten each one of the fasteners of the particular type to the target load level N_{TL}, regardless of its yield point load level. In an extreme case, this means that a fastener having a low frictional resistance, as the fastener II in Fig. 2, will not even reach its yield point when reaching the target load N_{TL}.

The advantage of this method is that the scattering of the obtained axial loads is kept to a minimum, while at the same time utilising the full strength of the fastener in the worst case, i.e. the case with the highest frictional resistance and the lowest load reached at the yield point. In other words, the maximum axial load obtainable at the safety margin angle αₘₐₓ of the fastener having the lowest yield point load level is appointed the target load N_{TL} for the particular type of fastener. This means that there is no risk for exceeding the safety margin for any other one of the fasteners.

## Claims

1. Method for determining the axial load (N) in a threaded fastener tightened beyond the yield point of the fastener by measuring the travel time (Δt) for ultra-sonic waves induced in the fastener, wherein the yield point of the fastener is detected by indicating a significant change in the relationship between two tightening parameters, **characterized in that** the axial load (N_{Y}) in the yield point of the fastener is determined by comparing the actual difference in the ultra-sonic wave travel time (Δt) between the unloaded state and the yield point of the fastener with the difference in ultra-sonic wave travel time (Δt) between the unloaded state and the yield point according to a pre-tightening determined linear relationship between the axial load (N) and the ultra-sonic wave travel time (Δt), whereby the instantaneous ultra-sonic wave travel time (Δt) above the yield point is compared with a pre-tightening determined relationship between the axial load (N) and the ultra-sonic wave travel time (Δt) above the yield point for the actual type of fastener, thereby determining the axial load (N) for a certain ultra-sonic wave travel time (Δt).

2. Method according to claim 1, whereby is determined in a pre-study of a number of fasteners representing a normally expected scattering of frictional characteristics of the actual type of fastener the maximum ultra-sonic wave travel time (Δtₘₐₓ) corresponding to a maximum safety angle of rotation (αₘₐₓ) beyond the yield point of each one of said fasteners, wherein the maximum ultra-sonic wave travel time (Δtₘₐₓ) of that very fastener having the lowest yield point level corresponds to the highest final target axial load (N_{F}) to be safely expected from the actual type of fastener.

3. Method for tightening a threaded fastener to a predetermined axial load (N_{F}) above the yield point, comprising detection of the instantaneous values of the applied torques and the angular displacement (Φ) of the fastener, wherein the yield point is detected as a significant change in the torque / angle relationship between two tightening parameters, **characterized by** also detecting the travel time (Δt) of ultra-sonic waves induced in the fastener, and determining the axial load (N_{Y}) in the yield point by comparing the ultra-sonic wave travel time (Δt_{Y}) in the yield point of the fastener with the pre-established ultra-sonic travel time (Δt) in an unloaded fastener, and
continuing tightening of the fastener beyond the yield point until the instantaneous ultra-sonic wave travel time (Δt) reaches a level (Δt_{F}) which according to a pre-tightening determined relationship between the ultra-sonic travel time (Δt) and the axial load (N) corresponds to the desired final axial load (N_{F}).

4. Method according to claim 3, whereby is determined in a pre-study of a number of fasteners of the actual type the maximum ultra-sonic wave travel time (Δtₘₐₓ) corresponding to a maximum safety angle of rotation (αₘₐₓ) beyond the yield point of each one of said fasteners, wherein the maximum ultra-sonic wave travel time (Δtₘₐₓ) of that very fastener having the lowest yield point level corresponds to the highest final target axial load (N_{F}) to be safely expected from the actual type of fastener.

## Patentansprüche

1. Verfahren zur Bestimmung der Axiallast (N) in einer über ihren Punkt der Streckgrenze angezogenen Gewindeverbindung durch Messen der Laufzeit (Δt) von Ultraschallwellen, die in die Verbindung eingeleitet werden, wobei der Punkt der Streckgrenze in der Verbindung durch Indizieren einer wesentlichen Veränderung im Zusammenhang zwischen zwei Anzugsparametern bestimmt wird, **dadurch gekennzeichnet, daß** die Axiallast (N_{Y}) im Punkt der Streckgrenze der Verbindung durch Vergleichen der Ist-Differenz der Laufzeit (Δt) der Ultraschallwellen zwischen dem unbelasteten Zustand und dem Punkt der Streckgrenze der Verbindung mit der Differenz der Laufzeit (Δt) der Ultraschallwellen zwischen dem unbelasteten Zustand und dem Punkt der Streckgrenze entsprechend einem vor dem Anziehen bestimmten linearen Zusammenhang zwischen der Axiallast (N) und der Laufzeit (Δt) der Ultraschallwellen bestimmt wird, wobei die augenblickliche Laufzeit (Δt) der Ultraschallwellen oberhalb des Punktes der Streckgrenze mit einem vor dem Anziehen bestimmten Zusammenhang zwischen der Axiallast (N) und der Laufzeit (Δt) der Ultraschallwellen oberhalb des Punktes der Streckgrenze für die vorliegende Art von Verbindung verglichen und dadurch die Axiallast (N) für eine bestimmte Laufzeit (Δt) der Ultraschallwellen bestimmt wird.

2. Verfahren nach Anspruch 1, **dadurch gekennzeichnet, daß** in einer Voruntersuchung eine Anzahl von Verbindungen, die eine normal erwartete Streuung der Reibeigenschaften der vorliegenden Art von Verbindung repräsentiert, die maximale Laufzeit (Δtₘₐₓ) der Ultraschallwellen entsprechend einem maximalen Sicherheitsdrehwinkel (αₘₐₓ) oberhalb des Punktes der Streckgrenze von jeder der Verbindungen bestimmt wird, wobei die maximale Laufzeit (Δtₘₐₓ) der Ultraschallwellen gerade der Verbindung, die das niedrigste Niveau des Punktes der Streckgrenze besitzt, der höchsten abschließenden Zielaxiallast (N_{F}) entspricht, die sicher von der vorliegenden Art von Verbindung zu erwarten ist.

3. Verfahren zum Anziehen einer Gewindeverbindung auf eine vorbestimmte Axiallast (N_{F}) oberhalb des Punktes der Streckgrenze, das das Erfassen des gegenwärtigen Wertes des eingeleiteten Drehmoments und der Winkelverlagerung (Φ) der Verbindung umfaßt, wobei der Punkt der Streckgrenze als eine wesentliche Veränderung im Zusammenhang zwischen Drehmoment und Winkel zwischen zwei Anzugsparametern erfaßt wird, **dadurch gekennzeichnet, daß** auch die Laufzeit (Δt) von in die Verbindung eingeleiteten Ultraschallwellen erfaßt und die Axiallast (N_{Y}) im Punkt der Streckgrenze durch Vergleich der Laufzeit (Δt_{Y}) der Ultraschallwellen im Punkt der Streckgrenze der Verbindung mit der zuvor ermittelten Laufzeit (Δt) der Schallwellen in einer unbelasteten Verbindung verglichen werden und das Anziehen der Verbindung über den Punkt der Streckgrenze hinaus fortgesetzt wird, bis die gegenwärtige Laufzeit (Δt) der Ultraschallwellen ein Niveau (Δt_{F}) erreicht, das entsprechend einem vor dem Anziehen bestimmten Zusammenhang zwischen der Laufzeit (Δt) der Ultraschallwellen und der Axiallast (N) der gewünschten abschließenden Axiallast (N_{F}) entspricht.

4. Verfahren nach Anspruch 3, **dadurch gekennzeichnet, daß** in einer Voruntersuchung einer Anzahl von Verbindungen des vorliegenden Typs die maximale Laufzeit (Δtₘₐₓ) der Ultraschallwellen entsprechend einem maximalen Sicherheitsdrehwinkel (αₘₐₓ) oberhalb des Punktes der Streckgrenze jeder der Verbindungen bestimmt wird, wobei die maximale Laufzeit (Δtₘₐₓ) der Ultraschallwellen gerade der Verbindung mit dem niedrigsten Niveau des Punktes der Streckgrenze der höchsten abschließenden Zielaxiallast (N_{F}) entspricht, die sicher von der vorliegenden Art von Verbindung zu erwarten ist.

## Revendications

1. Procédé de détermination de la charge axiale (N) d'une fixation taraudée qu'on serre au-delà de sa limite de déformation élastique, en mesurant le temps de parcours (Δt) d'ondes ultrasoniques induites dans la fixation, la limite de déformation élastique de la fixation étant détectée en indiquant un changement important de la relation entre deux paramètres de serrage,
**caractérisé en ce que**
la charge axiale (N_{y}) au point limite de déformation de la fixation est déterminée en comparant la différence réelle de temps de parcours des ondes ultrasoniques (Δt) entre l'état non chargé et le point limite de déformation de la fixation, avec la différence de temps de parcours des ondes ultrasoniques (Δt) entre l'état non chargé et le point limite de déformation suivant une relation linéaire déterminée de pré-serrage entre la charge axiale (N) et le temps de parcours des ondes ultrasoniques (Δt), de sorte que le temps de parcours instantané des ondes ultrasoniques (Δt) au-dessus du point limite de déformation, est comparé à une relation de pré-serrage déterminée entre la charge axiale (N) et le temps de parcours des ondes ultrasoniques (Δt) au-dessus du point limite de déformation, ce qui permet de déterminer la charge axiale (N) pour un certain temps de parcours (Δt) des ondes ultrasoniques.

2. Procédé selon la revendication 1,
selon lequel,
on détermine, dans une pré-étude d'un certain nombre de fixations représentant une dispersion normalement prévue des caractéristiques de frottement du type réel de fixation, le temps de parcours maximum des ondes ultrasoniques (Δtₘₐₓ) correspondant à un angle de rotation de sécurité maximum (αₘₐₓ) au-delà du point limite de déformation de chacune des fixations, de sorte que le temps de parcours maximum des ondes ultrasoniques (Δtₘₐₓ) de la propre fixation ayant le niveau limite de déformation le plus bas, correspond à la charge axiale finale visée la plus élevée (N_{F}) devant être attendue en toute sécurité du type de fixation réel.

3. Procédé de serrage d'une fixation taraudée jusqu'à la charge axiale prédéterminée (N_{F}) au-dessus de la limite de déformation élastique comprenant la détection des valeurs instantanées du couple appliqué et du déplacement angulaire (Φ) de la fixation, le point limite de déformation élastique étant détecté sous la forme d'un changement important de la relation couple/angle entre deux paramètres de serrage,
**caractérisé en ce qu'**
on détecte également le temps de parcours (Δt) des ondes ultrasoniques induites dans la fixation ;
on détermine la charge axiale (N_{y}) au point limite de déformation en comparant le temps de parcours des ondes ultrasoniques (Δt_{y}) au point limite de déformation de la fixation, avec le temps de parcours des ondes ultrasoniques pré-établi (Δt) dans une fixation non chargée ; et
on continue de serrer la fixation au-delà du point limite de déformation jusqu'à ce que le temps de parcours de déformation ET jusqu'à ce que le temps de parcours instantané des ondes ultrasoniques (Δt) atteigne un niveau (Δt_{F}) qui, selon une relation de pré-serrage déterminée entre le temps de parcours ultrasonique (Δt) et la charge axiale (N), correspond à la charge axiale finale voulue (N_{F}).

4. Procédé selon la revendication 3,
selon lequel
on détermine dans une pré-étude d'un certain nombre de fixations du type réel, le temps de parcours maximum (Δtₘₐₓ) des ondes ultrasoniques correspondant à un angle de rotation de sécurité maximum (αₘₐₓ) au-delà du point limite de déformation de chacune des fixations, de sorte que le temps de parcours maximum des ondes ultrasoniques (Δtₘₐₓ) de la propre fixation ayant le niveau limite de déformation le plus bas, correspond à la charge axiale finale visée (N_{F}) devant être attendue en toute sécurité du type de fixation réel.
